(19) Europäisches Patentamt
European Patent Office
Office européen des brevets

(11) Publication number: **0 226 149 B1**

(12) # EUROPEAN PATENT SPECIFICATION

(45) Date of publication of patent specification: **12.02.92**

(51) Int. Cl.⁵: **C08L 51/04**, C08L 71/12, C08F 291/02, //(C08F291/02, 212:04)

(21) Application number: **86116959.7**

(22) Date of filing: **05.12.86**

(54) **Process to produce polyphenylene ether blends with rubber modified polystyrene.**

(30) Priority: **11.12.85 US 807832**

(43) Date of publication of application:
**24.06.87 Bulletin 87/26**

(45) Publication of the grant of the patent:
**12.02.92 Bulletin 92/07**

(84) Designated Contracting States:
**DE FR GB IT NL**

(56) References cited:
**EP-A- 0 124 916**
**FR-A- 2 246 592**

(73) Proprietor: **GENERAL ELECTRIC COMPANY**
**1 River Road**
**Schenectady New York 12305(US)**

(72) Inventor: **Aycock, David Frederick**
**5 Hancock Drive**
**Glenmont, New York 12077(US)**

(74) Representative: **Catherine, Alain et al**
**General Electric France Service de Propriété Industrielle 18 Rue Horace Vernet**
**F-92136 Issy-Les-Moulineaux Cedex(FR)**

**EP 0 226 149 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for the preparation of a blend of a polyphenylene ether(oxide) resin with a rubber modified, high impact polystyrene resin (HIPS) and, more specifically, to an improved method in which the styrene polymerization is carried to a higher degree of conversion to induce crosslinking in the rubber phase and the resulting HIPS product is then solution blended with a polyphenylene ether.

Since U.S-A-3,383,435, and other disclosures, it has been known that polyphenylene ether(oxide) resins can be combined in admixture with polystyrene resins, including rubber modified high impact polystyrenes, to produce compositions of unusually effective properties for purposes of creating molded and other shaped articles.

Various procedures have been developed for mixing the two polymers to form a homogeneous composition. In one way, the polymers which have been formed separately are fed into an extruder where they are melt blended. In another way, the polymers are dissolved in a common solvent and solution blended, after which the volatiles are driven off to yield a uniform polymer mixture. U.S-A-4,436,870 describes a method of solution blending involving a multi-stage evaporation under reduced pressure to remove the volatiles, which is said to avoid the polymer degradation normally associated with melt blending the polymers in an extruder.

Still another type of procedure involves the polymerization of styrene in the presence of a solution of a polyphenylene ether, to produce a graft copolymer of the two, as described in U.S-A-3,929,930 and 3,929,931.

Blends of polyphenylene ethers with high impact polystyrenes have also been made by a continuous process in which the reactor product from a high impact polystyrene polymerization is blended with a solution of a polyphenylene ether resin and the resulting mixture is then devolatized.

In essence, the present invention provides an improvement in a continuous process for the preparation of a homogeneous composition of polyphenylene ether resin and a rubber modified, high impact polystyrene resin by polymerizing styrene monomer in the presence of rubber to form the high impact polystyrene and then solution blending it with the polyphenylene ether resin.

Briefly, the improvement in this process comprises polymerizing the styrene monomer for a period of time sufficient to achieve a degree of conversion of not less than about 90 per cent, whereby crosslinking of the rubber occurs.

The invention is based on the present discovery that conversions of the styrene monomer must be about 90 per cent or higher, to preserve the microstructure of the rubber phase during the solution blending and isolation stages of the process. More specifically, it is important to control the rubber particle size and distribution of the HIPS rubber phase microstructure, because impact and other properties are strongly affected by these characteristics.

Now it has been found that styrene monomer conversions above about 85 per cent, and more exactly, conversions of about 90 per cent and higher are necessary to initiate crosslinking of the rubber particles in the HIPS polymer, and that these crosslinked rubber particles, which are insoluble, are better able to survive, intact, the high solvent levels and shear forces employed in the blending and isolation steps. In contrast, solvent swollen, uncrosslinked rubber particles are easily shredded during these process steps and, as a result, the rubber particle and distribution characteristics are sharply changed from their initial values to new values which often are not as favorable for the products made from the composition.

The per cent of styrene monomer conversion referred to throughout this disclosure, including the values given in the examples, are computed according to the formula

$$\text{per cent conversion} = \frac{(\text{initial styrene concentration} - \text{final styrene conc.})}{\text{initial styrene conc.}} \times 100$$

Also contemplated as part of this invention are the polymer blends produced by the above mentioned process, which are characterized by improved properties as demonstrated in the examples.

The rubber modified, high impact polystyrene (HIPS) made in accordance with the process of this invention is characterized essentially by the aforementioned per cent of styrene copolymer conversion. However, preferred embodiments of this HIPS will also possess certain other physical properties as a consequence of its formation in the prescribed manner. The high impact polystyrene will possess a crosslinked rubber phase characterized by a gel content of not less than about 9 per cent and preferably a

swelling index of not greater than 35.0.

In practice, the process of this invention is carried out on a continuous basis by feeding a solution of styrene and rubber to a standard reactor train for the solution polymerization of styrene.

The styrene monomer used in the reaction is styrene itself, or any of the homologs or analogs suitable for use in styrene polymerization, and particularly compounds of the formula

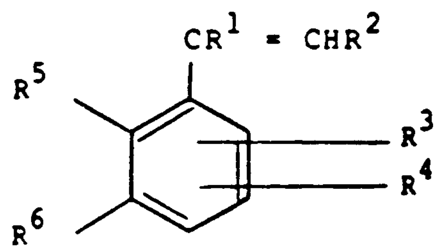

wherein $R^1$ and $R^2$ are selected from the group consisting of lower alkyl or alkenyl groups of from 1 to 6 carbon atoms, and hydrogen; and $R^3$, $R^4$, $R^5$ and $R^6$ are selected from the group consisting of chloro, bromo, hydrogen and lower alkyl or alkenyl groups of from 1 to 6 carbon atoms. Examples include alpha-methyl styrene, para-methyl styrene, 2,4-dimethyl styrene, chlorostyrene, dichlorostyrene, bromostyrene, dibromostyrene, para-tert-butyl styrene, and para-ethyl styrene.

If desired, styrene copolymers can be formed, such as styrene-acrylonitrile copolymer, from the corresponding comonomers.

Any of the rubbers known to be useful in the formation of rubber modified, high impact polystyrene can be used in the present process, including polybutadiene, polyisoprene, ethylene-propylene copolymers (EPR), ethylene-propylene-diene (EPDM) rubber, styrene-butadiene copolymers (SBR), and polyacrylates.

Conventional amounts of rubber can be used, for example, from 4 to 30 per cent by weight, based on 100 percent of the HIPS (that is, the polystyrene resin and rubber content combined).

The styrene monomer feed can optionally also contain other ingredients to facilitate the reaction or to prevent undesired side effects. Thus, for instance, a small amount of mineral oil or other lubricant which acts as a processing aid can be included, as well as small amounts of antioxidants or stabilizers to retard or reduce thermal degradation of the polystyrene or the rubber during the course of the polymerization reaction.

Residence times and reaction temperatures are employed which effect conversion of 90 per cent or more, ultimately, of the styrene monomer fed to the reactor train. Such conditions will obviously vary with the system design, the feed composition, and, if used, the catalyst concentration. For instance, when styrene is thermally polymerized the degree of conversion can be increased in a polymerization reaction system by increasing the temperature profile of the reactor train. In addition, if a polymerization catalyst is used, such as a peroxide, the degree of conversion can be increased by increasing the catalyst concentration.

The HIPS product stream from the last reactor in the train is then mixed with a second stream, which comprises a solution of a polyphenylene ether(oxide) resin in a solvent in which at least the polystyrene phase of the HIPS is also soluble, to effect solution blending.

Any organic solvent for the polyphenylene ether resin and rubber modified, high impact polystyrene resin (HIPS) may be used, including benzene; toluene; ethylbenzene; cumene; xylene; methylethylbenzene; aliphatic hydrocarbons, for example, methylene chloride; aromatic halohydrocarbons, for example, chlorobenzene and dichlorobenzene; aryl alkyl ethers, for example, anisole, p-methylanisole, and ethyl phenyl ether; and aromatic carboxylic acid esters, for example, methyl benzoate.

The polyphenylene ethers(also known as polyphenylene oxides) used in the present invention are a well known class of polymers which have become very useful commercially as a result of the discovery by Allan S. Hay of an efficient and economical method of production (See, for example, U.S-A-3,306,874 and 3,306,875). Numerous modifications and variations have since been developed but, in general, they are characterized as a class by the presence of arylenoxy structural units. The present invention includes all such variations and modifications, including to those described hereinafter.

The polyphenylene ethers favored for use in the practice of this invention generally contain structural units of the following formula

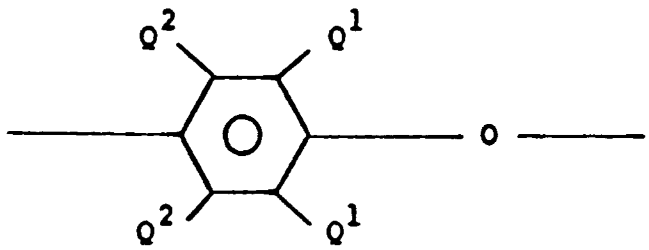

(I)

in which in each of these units independently each $Q^1$ is hydrogen, halogen, primary or secondary lower alkyl (i.e., alkyl containing up to 7 carbon atoms), phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3- or 4-methylpentyl and the corresponding heptyl groups. Examples of secondary lower alkyl groups are isopropyl, sec-butyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Both homopolymers and copolymers are included. Suitable homopolymers are those containing, for example, 2,6-dimethyl-1,4-phenylene ether units. Suitable copolymers include random copolymers containing such units in combination with, for example, 2,3,6-trimethyl-1,4-phenylene ether units. Many suitable random copolymers, as well as homopolymers, are disclosed in the patent literature, including various Hay patents. Also contemplated are graft copolymers, including those prepared by grafting onto the polyphenylene ether chain such vinyl monomers as acrylonitrile and vinyl aromatic compounds (for example, styrene), and such polymers as polystyrenes and elastomers. Still other suitable polyphenylene ethers are the coupled polyphenylene ethers in which the coupling agent is reacted with the hydroxy groups of the two polyphenylene ether chains to increase the molecular weight of the polymer. Illustrative of the coupling agents are low molecular weight polycarbonates, quinones, beterocycles and formals.

The polyphenylene ether generally has a molecular weight (number average, as determined by gel permeation chromatography, whenever used herein) within the range of 5,000 to 40,000. The intrinsic viscosity of the polymer is usually in the range of 0.40 to 0.5 deciliters per gram (dl./g.), as measured in solution in chloroform at 25° C.

The polyphenylene ethers may be prepared by known methods, and typically by the oxidative coupling of at least one corresponding monohydroxyaromatic (e.g., phenolic) compound. A particularly useful and readily available monohydroxyaromatic compound is 2,6-xylenol (in which for the above formula each $Q^1$ is methyl and each $Q^2$ is hydrogen), the corresponding polymer of which may be characterized as a poly(2,6-dimethyl-1,4-phenylene ether).

Any of the various catalyst systems known in the art to be useful for the preparation of polyphenylene ethers can be used in preparing those employed in this invention. For the most part, they contain at least one heavy metal compound, such as a copper, manganese or cobalt compound. usually in combination with various other materials.

Among the preferred catalyst systems are those containing copper. Such catalysts are disclosed, for example, in the aforementioned U.S-A-3,306,874 and 3,306,875. They are usually combinations of cuprous or cupric ions, halide ions (i.e., chloride, bromide or iodide), and at least one amine.

Also preferred are catalyst systems containing manganese. They are generally alkaline systems containing divalent manganese and such anions as halide, alkoxide or phenoxide. Most often, the manganese is present as a complex with one or more complexing and/or chelating agents such as dialkylamines, alkanolamines, alkylenediamines, o-hydroxyaromatic aldehydes, o-hydroxyazo compounds, $\omega$-hydroxyoximes (both monomeric and polymeric), o-hydroxyaryl oximes, and $\alpha$-diketones. Also useful are cobalt-containing catalyst systems. Those skilled in the art will be familiar with patents disclosing manganese and cobalt-containing catalyst systems for polyphenylene ether preparation.

Especially useful polyphenylene ethers for the purposes of this invention are those which comprise molecules having at least one of the end groups of formulas II and III, below, in which $Q^1$ and $Q^2$ are as previously defined, each $R^1$ is independently hydrogen or alkyl, providing that the total number of carbon atoms in both $R^1$ radicals is 6 or less, and each $R^2$ is independently hydrogen or a $C_{1-6}$ primary alkyl radical. Preferably, each $R^1$ is hydrogen and each $R^2$ is alkyl, especially methyl or n-butyl.

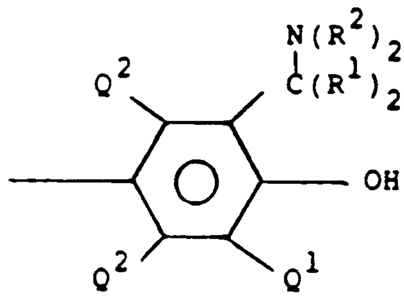

(II)

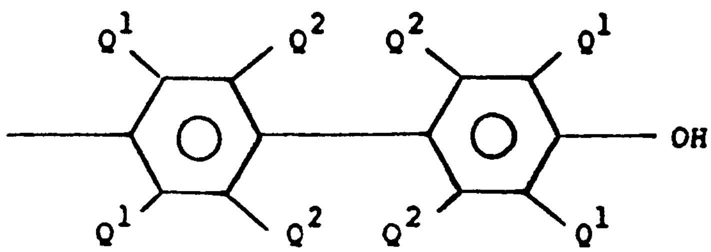

(III)

Polymers containing the aminoalkyl-substituted end groups of formula II may be obtained by incorporating an appropriate primary or secondary monoamine as one of the constituents of the oxidative coupling reaction mixture, especially when a copper- or manganese-containing catalyst is used. Such amines, especially the dialkylamines and preferably di-n-butylamine and dimethylamine, frequently become chemically bound to the polyphenylene ether, most often by replacing one of the $\alpha$-hydrogen atoms on one or more $Q^1$ radicals adjacent to the hydroxy group on the terminal unit of the polymer chain. During further processing and/or blending, the aminoalkenyl-substituted end groups may undergo various reactions, probably involving a quinone methide-type intermediate of formula IV, below ($R^1$ is defined as above), with beneficial effects often including an increase in impact strength and compatibilization with other blend components.

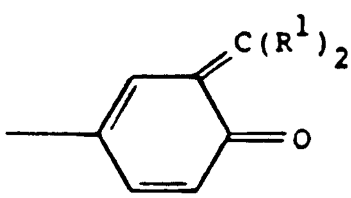

(IV)

Polymers with biphenol end groups of formula III are typically obtained from reaction mixtures in which a by-product diphenoquinone of formula V, below, is present, especially in a copper-halide-secondary or tertiary amine system. In this regard, the disclosures of the U.S-A-4,234,706, 4,477,649 and 4,482,697 are particularly pertinent. In mixtures of this type, the diphenoquinone is ultimately incorporated into the polymer in substantial amounts, chiefly as an end group.

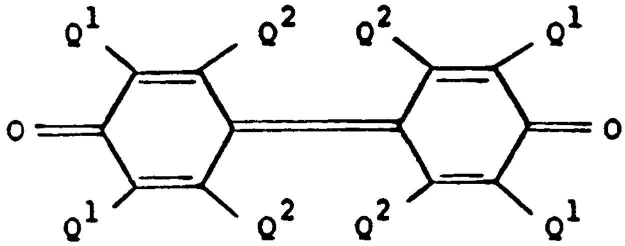

(V)

In many polyphenylene ethers obtained under the conditions described above, a substantial proportion

of the polymer molecules, usually as much as about 90% by weight of the polymer, contain end groups having one or frequently both of formulas II and III. It should be understood, however, that other end groups may be present and that the invention in its broadest sense may not be dependent on the molecular structures of the polyphenylene ether end groups.

It will thus be apparent to those skilled in the art that a wide range of polymeric materials encompassing the full recognized class of polyphenylene ether resins are contemplated as suitable for use in the practice of the present invention.

If desired, soluble supplementary ingredients selected from among conventional additives for polyphenylene ether(oxide)-high impact polystyrene blends can be added to either the HIPS product stream or the polyphenylene ether solution stream to take part in the solution blending step. These additives may be, for instance, plasticizers, flame retardant agents, stabilizers, antioxidants, mold release agents, and lubricants.

In particular the solution stream may contain an aromatic phosphate, for example isopropylated triphenyl phosphate.

The two polymer streams are mixed thoroughly in the conventional manner to ensure the formation of a homogeneous blend, after which the mixture is devolatilized to drive off the lower boiling components, including solvent and any unreacted styrene. Usually, the devolatilization is carried out in several stages. The volatile constituents from each stage may be condensed and collected for purification, as by distillation, and subsequent reuse in the present process.

The resulting devolatilized blend is useful for extrusion and molding into articles and parts of various shapes and sizes and, generally, they are suitable for any of the uses for which polyphenylene ether resin-HIPS blends are known.

The process of the present invention and the product produced by it are further illustrated in the description below, which is intended to show best or preferred embodiments.

## EXAMPLE

An experiment was performed to determine the effect of styrene conversion on rubber crosslinking, the data of which is reported in Table 1. These data were collected by taking a sample of the reactor product from a continuous rubber modified, high impact polystyrene (HIPS) reactor train at a point where the styrene conversion was about 77% (more exactly, 76.7%, as shown in Table 1). Portions of this sample were sealed separately in glass tubes and heated at 175°C. for varying lengths of time, to effect further reaction. The percent styrene solids, the percent gel of the HIPS rubber phase, and the swell index of the HIPS rubber phase were measured for each of the heated samples, and these are listed in the Table.

The %gel and the swell index were measured in toluene, where the swell index is equal to the weight of the toluene-swollen gel divided by the weight of gel.

TABLE 1

| Time at 175°C. (hrs.) | % Styrene Conversion | % Gel | Swell Index |
|---|---|---|---|
| 0 | 76.7 | 0.3 | --(initial sample) |
| 1 | 89.8 | 1.9 | 46.5 |
| 2.25 | 91.3 | 9.1 | 30.4 |
| 4 | 93.2 | 12.1 | 25.6 |
| 5 | 98.2 | 13.4 | 20.3 |

As can be seen, only with styrene conversions above about 90 percent are significant levels of gel measured (i.e., about 9-10% and greater).

The need for crosslinking to prevent shredding of the rubber particles in the rubber phase of the HIPS was demonstrated in another experiment. This experiment was conducted using a train of three reactors in which styrene was continuously polymerized in the presence of rubber, a mixing chamber for the solution blending of polyphenylene ether (oxide) in toluene with the HIPS reactor product from the reactor train, and a conventional devolatilization system to remove toluene and unreacted styrene monomer from the resulting

polymer blend.

The composition of the feed to the styrene polymerization reactor train was as follows:

| Materials | Amount, % by weight |
|---|---|
| Styrene | 76.9 |
| Toluene | 14.1 |
| Polybutadiene rubber (Taktene® 1202, Polysar Co.) | 7.3 |
| Mineral oil | 1.8 |
| Octadecyl 3-(3',5'-di-tert-butyl-4'-hydroxy phenyl) propionate (Irganox® 1076, Ciba-Geigy Corp.) | 0.06 |

The feed was pumped to a reactor train, consisting of three stirred plug flow reactors equipped with nine separate temperature control zones. Each reactor contained 74 liters of volume. The feed rate to the reactor train was 227 grams per minute, and the reactor zones were controlled at the temperatures listed below:

| Zone No. | Temperature, °C. |
|---|---|
| 1 | 110 |
| 2 | 115 |
| 3 | 118 |
| 4 | 121 |
| 5 | 124 |
| 6 | 127 |
| 7 | 130 |
| 8 | 137 |
| 9 | 144 |

The product from the last reactor had a measured conversion of 77 percent. It was devolatilized and collected as a rubber modified, high impact polystyrene (Sample 1).

Using the same feed and reactor conditions used to make HIPS Sample 1, the HIPS product stream from the last reactor was solution blended with a stream containing the following:

| Material | Amount, % by weight |
|---|---|
| Toluene | 64.4 |
| Poly(2,6-dimethyl-1,4-phenylene ether) resin(PPO®, General Electric Co., I.V. 0.47 dl./g., chloroform, 25°C.) | 27.6 |
| Isopropylated triphenyl phosphate (Kronitex®-50, FMC Corp.) | 8.0 |

The two streams were solution blended in a ratio to give a final devolatilized product (Sample 2) having the following composition:

| Material | Amount, % by weight |
|---|---|
| Rubber modified, high impact polystyrene (HIPS) | 43.7 |
| Poly(2,6-dimethyl-1,4-phenylene ether) resin (PPO®) | 43.7 |
| Isopropylated triphenyl phosphate(Kronitex®-50) | 12.7 |

In the same experiment, another styrene polymerization was carried out using the same reactor train as above, but with a feed having the following composition:

| Material | Amount, % by weight |
|---|---|
| Styrene | 75.5 |
| Toluene | 13.8 |
| Polybutadiene rubber (Taktene 1202) | 8.9 |
| Mineral Oil | 1.7 |
| Octadecyl 3-(3',5'-di-tert-butyl-4'-hydroxy phenyl) propionate (Irganox® 1076) | 0.06 |

The feed was pumped to a reactor train consisting of three stirred plug flow reactors equipped with nine separate temperature control zones. Each reactor contained 74 liters of volume. The feed rate to the reactor train was 227 grams per minute, and the reactor zones were controlled at the temperatures listed:

| Zone No. | Temperature, °C. |
|---|---|
| 1 | 125 |
| 2 | 125 |
| 3 | 125 |
| 4 | 132 |
| 5 | 140 |
| 6 | 150 |
| 7 | 160 |
| 8 | 170 |
| 9 | 180 |

The product from the last reactor had a measured conversion of 92 percent. It was devolatilized and collected as a HIPS (Sample 3).

Using the same feed and reactor operating conditions as for Sample 3, the HIPS product stream from the last reactor in the train was solution blended with a stream composed of the following:

| Material | Amount, % by weight |
|---|---|
| Toluene | 64.4 |
| Poly(2,6-dimethyl-1, 4-phenylene ether) resin (PPO®) | 27.6 |
| Isopropylated triphenyl phosphate (Kronitex®-50) | 8.0 |

The two streams were solution blended in a ratio to give a final devolatilized product (Sample 4) composed of the following:

| Material | Amount, % by weight |
|---|---|
| Rubber modified, high impact polystyrene(HIPS) | 43.7 |
| Poly(2,6-dimethyl-1,4-phenylene ether) resin (PPO®) | 43.7 |
| Isopropylated triphenyl phosphate (Kronitex®-50) | 12.7 |

The rubber particle size of the HIPS and HIPS-polyphenylene ether samples described above were determined by the procedure given below, the results of which are set forth in Table 2. As can be seen, when the HIPS reactor train was running at a styrene conversion of 77% prior to the product stream being mixed with the toluene-polyphenylene ether stream, the number average and weight average particle sizes were significantly reduced in the subsequent HIPS polyphenylene ether blend (Sample 1 versus Sample 2, Table 2). This undoubtedly was due to significant shearing of the HIPS rubber particles during the solution blending stage with the polyphenylene ether. In contrast, when the HIPS reactor train was operated to give

a 92% styrene monomer conversion, the subsequent HIPS-polyphenylene ether blend showed very little or no decline in the number average and weight average particle sizes(Sample 3 versus Sample 4, Table 2).

TABLE 2

| | Rubber Particle Size | |
|---|---|---|
| Sample No. | Weight Average | Number Average |
| 1(HIPS, 77%) | 2.69 | 1.46 |
| 2(Blend) | 0.99 | 0.50 |
| 3(HIPS, 92%) | 4.04 | 1.92 |
| 4(Blend) | 3.50 | 1.95 |

PROCEDURE FOR MEASURING RUBBER PARTICLE SIZE

Equipment: Standard WL Zeiss® Microscope Stand;
Triocular Tubehead with attachment for Polaroid® Cassette;
Light Source: 12V 60W filament lamp;
Achromatic- aplanatic brightfield condenser with swing-out front lens Z,NA1.3;
Eye Piece: 12.5 WPOL;
Objectives: POL 10/0.22 160/PLAN 100/1.25 oil 160/20x Projection Lens to Polaroid Cassette

Procedure:

Dissolve about 0.3 gram of HIPS in 5 milliliters of chloroform. Place a small drop of the solution on a microscope slide (20-50 µl) and allow to dry. Place the slide in a sealed bottle with iodine crystals in the bottle. Keep the slide in the iodine bottle for at least four hours (the longer times are better). Focus the stained slide with the POL 10 objective. A photo is taken at 200x magnification to give a wide field inspection for large rubber particles. The film used is Polaroid® 3000 SP type 107. A drop of oil ($N_D = 1.515$) is placed on top of the sample spot (no cover glass is used) and the PLAN 100 objective with the 1.3 aperture swing-in condenser is used to take a photo at 2000x magnification.

The rubber particle diameters were measured from the photographs, and the average diameters were calculated using the following formulae:

$$\text{Number Average} = \sum_{i=1}^{N} Di/N$$

The number average particle size is calculated by summing the diameters (D) of all the particles counted (a minimum of 200 particles) and dividing the sum of the particle diameters by the total number of particles counted. (N).

$$\text{Weight or Volume Average} = \sum_{i=1}^{N} Di^4 / \sum_{i=1}^{N} Di^3$$

The weight or volume average particle size is calculated by summing the diameters (D) raised to the fourth power of all the particles counted (a minimum of 200 particles) and dividing this sum by the sum of the diameters (D) raised to the third power of all the particles counted, where N is the total number of particles counted.

The practice of this invention may be varied from the particular embodiments illustrated without departing from the scope and principles intended. For instance, in place of polybutadiene rubber, another type of rubber such as polyisoprene, ethylene-propylene rubber (EPR), ethylene-propylene-diene (EPDM) rubber, or styrene-butadiene rubber (SBR) may be used. Similarly, in place of a polyphenylene ether homopolymer such as poly(2,6-dimethyl-1,4-phenylene ether) resin, a copolymer such as poly(2,6-dimethyl-co-2,3,6-trimethyl-1,4-phenylene ether) resin can be substituted. Other additives besides isopropylated triphenyl phosphate (Kronitex®-50) can be used in place of, or in addition to, this material in the solution blending stage.

## Claims

1. A continuous process for the preparation of a composition of a polyphenylene ether resin and a rubber modified, high impact polystyrene resin produced by polymerizing styrene monomer or homolog or analog thereof of the formula

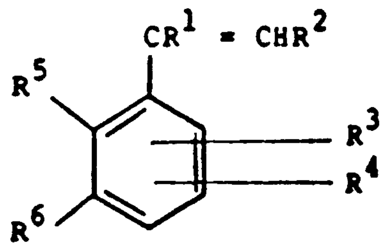

wherein $R^1$ and $R^2$ are selected from the group consisting of lower alkyl or alkenyl groups of from 1 to 6 carbon atoms, and hydrogen; and $R^3$, $R^4$, $R^5$ and $R^6$ are selected from the group consisting of chloro, bromo, hydrogen, and lower alkyl or alkenyl groups of from 1 to 6 carbon atoms, in the presence of rubber to form the rubber modified, high impact polystyrene resin and then solution blending it with the polyphenylene ether resin, characterized in that it comprises

polymerizing the monomer for a period of time sufficient to achieve a degree of conversion of not less than about 90 per cent, whereby crosslinking of the rubber occurs, and a gel content of not less than about 9 per cent.

2. The process of Claim 1, characterized in that the crosslinked rubber produced in the process has a swelling index of not greater than 35.0.

3. The process of Claim 1, in which the rubber is polybutadiene.

4. The process of Claim 1, in which the styrene polymerization is conducted in a continuous reactor train.

5. The process of Claim 1, in which the styrene monomer is polymerized in the presence of a comonomer to form a copolymer.

6. The process of Claim 1, in which the polyphenylene ether resin contains structural units of the formula

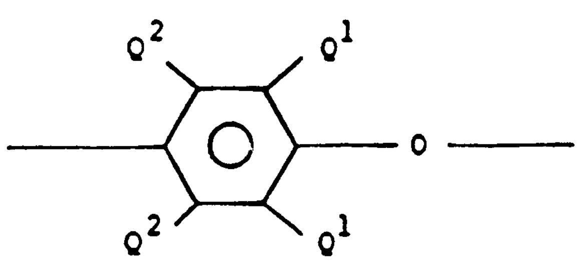

in which in each of these units independently each $Q^1$ is hydrogen, halogen, primary or secondary lower alkyl having up to seven carbon atoms, phenyl, haloalkyl or aminoalkyl wherein at least two

carbon atoms separate the halogen or nitrogen atom from the benzene ring, hydrocarbonoxy, or halohydrocarbonowy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$.

**7.** The process of Claim 1, in which the polyphenylene ether resin is poly (2, 6-dimethyl-1-4-phenylene ether) resin.

**8.** The process of Claim 7, in which the poly (2, 6-dimethyl-1-4-phenylene ether) resin has an intrinsic viscosity in the range of 0.40 to 0.5 deciliters, per gram in chloroform at 25 °C.

**9.** The process of Claim 1, in which the polyphenylene ether resin is poly (2, 6-dimethyl-co-2, 3, 6-trimethyl-1, 4-phenylene ether) resin.

**10.** The process of Claim 1, in which the blending of the rubber modified, high impact polystyrene with polyphenylene ether resin is conducted in an organic solvent.

**11.** The process of Claim 10, in which the solvent is toluene.

**12.** The process of Claim 10, in which the solution also contains an aromatic phosphate.

**13.** The process of Claim 12, in which the aromatic phosphate is isopropylated triphenyl phosphate.

**Revendications**

**1.** Procédé continu pour la préparation d'une composition faite d'une résine polyphénylène éther et d'une résine polystyrène-choc modifié par du caoutchouc produite par polymérisation du styrène monomère ou d'un homologue ou analogue de celui-ci de formule

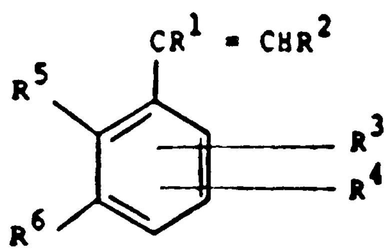

dans laquelle $R^1$ et $R^2$ sont choisis dans le groupe constitué par les groupes alkyle ou alcényle inférieurs de 1 à 6 atomes de carbone et un atome d'hydrogène ; et $R^3$, $R^4$, $R^5$ et $R^6$ sont choisis dans le groupe constitué par un atome d'hydrogène et les groupes chloro, bromo et alkyle ou alcényle inférieurs de 1 à 6 atomes de carbone, en présence de caoutchouc, pour former la résine polystyrène-choc modifié par du caoutchouc, puis le mélange en solution de celle-ci avec la résine polyphénylène éther, caractérisé en ce qu'il comprend

la polymérisation du monomère pendant une période suffisante pour assurer un degré de conversion d'au moins environ 90 %, afin qu'une réticulation du caoutchouc se produise, et une teneur en gel qui n'est pas inférieure à environ 9 %.

**2.** Procédé selon la revendication 1, caractérisé en ce que le caoutchouc réticulé produit dans le procédé a un indice de gonflement qui n'est pas supérieur à 35,0.

**3.** Procédé selon la revendication 1, dans lequel le caoutchouc est un polybutadiène.

**4.** Procédé selon la revendication 1, dans lequel la polymérisation du styrène est effectuée dans un train continu de réacteurs.

**5.** Procédé selon la revendication 1, dans lequel le styrène monomère est polymérisé en présence d'un

comonomère pour former un copolymère.

**6.** Procédé selon la revendication 1, dans lequel la résine polyphénylène éther contient des motifs structuraux de formule

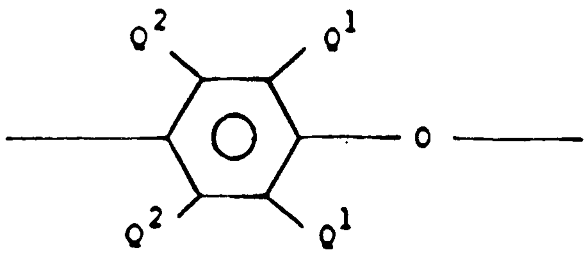

dans chacun desquels motifs, indépendamment, chaque $Q^1$ est un atome d'hydrogène ou d'halogène ou un groupe alkyle inférieur primaire ou secondaire ayant jusqu'à 7 atomes de carbone, phényle, halogénoalkyle ou aminoalkyle, où au moins deux atomes de carbone séparent l'atome d'halogène ou d'azote du cycle benzène, hydrocarbonoxy ou halogénohydrocarbonoxy, où au moins deux atomes de carbone séparent les atomes d'halogène et d'oxygène ; et chaque $Q^2$ est indépendamment un atome d'hydrogène ou d'halogène ou un groupe alkyle inférieur primaire ou secondaire, phényle, halogénoalkyle, hydrocarbonoxy ou halogénohydrocarbonoxy, comme défini pour $Q^1$.

**7.** Procédé selon la revendication 1, dans lequel la résine polyphénylène éther est une résine poly(2,6-diméthyl-1,4-phénylène éther).

**8.** Procédé selon la revendication 7, dans lequel la résine poly(2,6-diméthyl-1,4-phénylène éther) a une viscosité intrinsèque dans la gamme de 0,40 à 0,5 dl/g dans le chloroforme à 25 °C.

**9.** Procédé selon la revendication 1, dans lequel la résine polyphénylène éther est une résine poly(2,6-diméthyl-co-2,3,6-triméthyl-1,4-phénylène éther).

**10.** Procédé selon la revendication 1, dans lequel le mélange du polystyrène-choc modifié par du caoutchouc avec la résine polyphénylène éther est effectué dans un solvant organique.

**11.** Procédé selon la revendication 10, dans lequel le solvant est le toluène.

**12.** Procédé selon la revendication 10, dans lequel la solution contient également un phosphate aromatique.

**13.** Procédé selon la revendication 12, dans lequel le phosphate aromatique est le phosphate de triphényle isopropylé.

**Patentansprüche**

**1.** Kontinuierliches Verfahren für die Herstellung einer Zusammensetzung aus einem Polyphenylenätherharz und einem gummimodifizierten, hochschlagfesten Polystyrolharz, welches durch Polymerisation von Styrolmonomerem oder von Homologem oder Analogem desselben mit der Formel

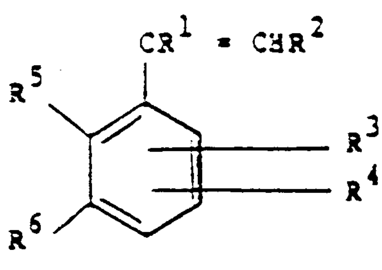

hergestellt wird, worin $R^1$ und $R^2$ ausgewählt sind aus der Gruppe bestehend aus niederen Alkyl- oder Alkenylgruppen mit 1 - 6 Kohlenstoffatomen und Wasserstoff; und $R^3$, $R^4$, $R^5$ und $R^6$ ausgewählt sind aus der Gruppe bestehend aus Chlor, Brom, Wasserstoff und niederen Alkyl oder Alkenylgruppen mit 1 - 6 Kohlenstoffatomen in Anwesenheit des Gummis zur Bildung des gummimodifizierten, hochschlagfesten Polystyrolharzes und anschließende Lösungsmischung desselben mir dem Polyphenylenätherharz, gekennzeichnet dadurch, daß es die Polymerisation des Monomeren für eine ausreichend lange Zeitdauer umfaßt, um einen Umwandlungsgrad von nicht weniger als etwa 90% zu erzielen, wobei die Vernetzung des Gummis stattfindet, und ein Gelgehalt von nicht weniger als etwa 9% erreicht wird.

**2.** Verfahren nach Anspruch 1, dadurch gekennzeichnet, daß der in dem Verfahren hergestellte vernetzte Gummi einen Blähgrad von nicht mehr als 35,0 aufweist.

**3.** Verfahren nach Anspruch 1, in welchem der Gummi Polybutadien ist.

**4.** Verfahren nach Anspruch 1, in welchem die Styrolpolymerisation in einem kontinuierlichen Reaktionsreaktor durchgeführt wird.

**5.** Verfahren nach Anspruch 1, in welchem das Styrolmonomere in Anwesenheit eines Comonomeren unter Bildung eines Copolymeren polymerisiert wird.

**6.** Verfahren nach Anspruch 1, in welchem das Polyphenylenätherharz Struktureinheiten der Formel

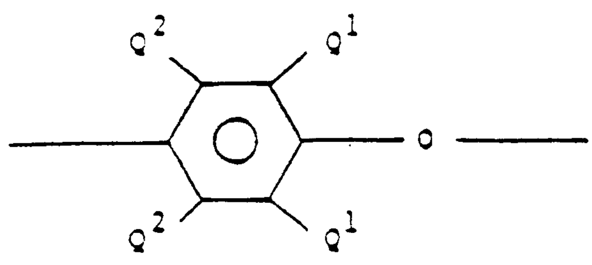

enthält, in welchen in jeder dieser Einheiten jedes $Q^1$ unabhängig Wasserstoff, Halogen, primäres oder sekundäres niederes Alkyl mit bis zu 7 Kohlenstoffatomen, Phenyl, Halogenalkyl oder Aminoalkyl ist, worin wenigstens zwei Kohlenstoffatome das Halogen oder Stickstoffatom von dem Benzolring trennen, Hydrocarbonoxy oder Halogenhydrocarbonoxy darstellen worin wenigstens zwei Kohlenstoffatome die Halogen- und Sauerstoffatome trennen, und jedes $Q^2$ unabhängig Wasserstoff, Halogen, primäres oder sekundäres niederes Alkyl, Phenyl, Halogenalkyl, Hydrocarbonoxy oder Halogenhydrocarbonoxy, wie es für $Q^1$ definiert ist, darstellt.

**7.** Verfahren nach Anspruch 1, in welchem das Polyphenylenätherharz Poly-(2,6-dimethyl-1,4-phenylenäther)-harz ist.

**8.** Verfahren nach Anspruch 7, in welchem das Poly-(2,6-dimethyl-1,4-phenylenäther)-harz eine grundmolare Viskosität im Bereich von 0,40 - 0,5 Deziliter pro Gramm in Chloroform bei 25 °C aufweist.

**9.** Verfahren nach Anspruch 1, in welchem das Polyphenylenätherharz Poly-(2,6-dimethyl-co-2, 3, 6-trimethyl-1, 4-phenylenäther)-harz ist.

**10.** Verfahren nach Anspruch 1, in welchem die Mischung des gummimodifizierten hochschlagfesten Polystyrols mit Polyphenylenätherharz in einem organischen Lösungsmittel durchgeführt wird.

**11.** Verfahren nach Anspruch 10, in welchem das Lösungsmittel Toluol ist.

**12.** Verfahren nach Anspruch 10, in welchem die Lösung weiterhin ein aromatisches Phosphat enthält.

**13.** Verfahren nach Anspruch 12, in welchem das aromatische Phosphat isopropyliertes Triphenylphosphat ist.